# EUROPÄISCHE PATENTSCHRIFT

(11) **EP 1 937 516 B1**
(45) Veröffentlichungstag und Bekanntmachung des Hinweises auf die Patenterteilung: **11.04.2012**
(21) Anmeldenummer: 06805462.6
(22) Anmeldetag: 19.10.2006
(51) Int. Cl.: B60R 21/261, B60R 21/217

(54) **AIRBAGMODUL, INSBESONDERE FÜR EINEN KNIEAIRBAG**
AIR BAG MODULE, ESPECIALLY FOR A KNEE AIR BAG
MODULE SAC GONFLABLE DESTINE NOTAMMENT A UN SAC GONFLABLE GENOUX

(30) Priorität: 20.10.2005 DE 202005016887 U
(43) Veröffentlichungstag der Anmeldung: 02.07.2008
(73) Patentinhaber: Takata-Petri AG, 63743 Aschaffenburg (DE)
(72) Erfinder: KAMPFMANN, Wolfgang, 63863 Eschau (DE); BLATTNER, Joachim, 63857 Waldaschaff (DE); TERLUNEN, Andreas, 16567 Mühlenbeck (DE)
(74) Vertreter: Baumgärtel, Gunnar
(86) Internationale Anmeldenummer: PCT/DE2006/001863
(87) Internationale Veröffentlichungsnummer: WO 2007/045231

(56) Entgegenhaltungen:
- EP-A1- 0 680 851
- EP-A1- 0 861 762
- EP-A2- 1 273 489
- WO-A-03/093070
- DE-U1- 20 019 636
- DE-U1- 29 917 645

## Beschreibung

Der Erfindung liegt die Aufgabe zugrunde, die Herstellung und Montage einer Gasleiteinrichtung, an der ein Gasgenerator befestigt ist, zu vereinfachen.

Die Erfindung betrifft ein Airbagmodul, insbesondere für einen Knieairbag nach dem Oberbegriff des Anspruchs 1.

Aus der gattungsgemäßen WO 03/093070 A ist ein Airbagmodul bekannt, bei dem ein Rohrgasgenerator an einer Stirnseite in einer Halterung befestigt ist, die Teil des Modulgehäuses ist. Weiterhin ist ein gesondertes Gassackhalteblech vorgesehen. Auch diese Anordnung weist den Nachteil einer aufwendigen Fertigung auf. Auch aus den Druckschriften DE 200 19 636 U1, EP-A1-0 680 851, DE 299 17 645 U1, EP-A1-0 861 762 und EP-A2-1 273 489 sind Airbagmodule bekannt, bei denen ein Rohrgasgenerator in Abschnitten des Modulgehäuses gelagert ist. Hierbei besteht ebenfalls der Nachteil der aufwendigen Fertigung des Modulgehäuses.

Aus der DE 103 54 560 A1 ist ein Airbagmodul bekannt, bei dem ein Gaslenkungsblech mittels Bolzen am Airbaggehäuse befestigt ist. Der Rand einer Einblasöffnung des Gassacks ist großflächig zwischen dem Boden des Airbaggehäuses und dem Boden des Gaslenkungsbleches geklemmt. Durch eine Öffnung im Gaslenkungsblech und im Airbaggehäuse erstreckt sich ein Gasleitungsrohr als gesondertes Bauteil in den Stauraum für den Gassack hinein. Das Gasleitungsrohr weist unterhalb der im Stauraum des Gassacks liegenden Ausströmöffnungen einen Flansch auf, der auf dem Gaslenkungsblech aufliegt und dort mit diesem verbunden ist.

Das Gasleitungsrohr erstreckt sich aus dem Airbaggehäuse heraus und weist dort Einströmöffnungen auf. In diesem Bereich, d. h., außerhalb des Airbaggehäuses, ist ein Rohrgasgenerator am Gasleitungsrohr befestigt.

Diese Anordnung weist den Nachteil auf, dass das Gasleitungsrohr relativ aufwendig herzustellen ist, da es einen Befestigungsflansch aufweist, und dass zusätzlicher Aufwand durch die Montage am Gaslenkungsblech entsteht.

Erfindungsgemäß wird das gemäß den Merkmalen des Anspruchs 1 erreicht.

Bei einem Airbagmodul, insbesondere für einen Knieairbag mit einem Airbaggehäuse, mit einem Gassack, mit einem Rohrgasgenerator, mit einer Gassackhalterung und mit einer Gasleiteinrichtung, an der der Rohrgasgenerator befestigt ist, weist erfindungsgemäß die Gassackhalterung einstückig die Gasleiteinrichtung auf. Diese Anordnung weist den Vorteil auf, dass die Gassackhalterung und die Gasleiteinrichtung in einem Arbeitsgang hergestellt werden und dass die Kosten für die Montage der Gasleiteinrichtung entfallen.

Vorzugsweise weist die Gassackhalterung ein Halteblech für die Befestigung des Gassacks auf und sie weist einen domartig gewölbten Abschnitt als Gasleiteinrichtung auf. Die Gasleiteinrichtung ragt vom Halteblech aus vorzugsweise nach außen.

Das Halteblech ist zumindest annähernd rechteckförmig und, die Gasleiteinrichtung weist zumindest annähernd einen quadratischen Querschnitt auf.

Die Gassackhalterung ist vorzugsweise als Tiefziehteil ausgebildet.

In einer bevorzugten Ausführungsform ist ein Rohrgasgenerator vorgesehen, der die Gasaustrittsöffnungen an einem Ende aufweist. Der Rohrgasgenerator ist dann mit diesem Ende an der Gasleiteinrichtung befestigt und das andere Ende des Rohrgasgenerators ist in einer am Airbaggehäuse befestigten Schelle gelagert.

Die Erfindung soll in einem Ausführungsbeispiel anhand von Zeichnungen erläutert werden. Es zeigen:
Fig. 1 die erfindungsgemäße Gassackhalterung mit Gasleiteinrichtung;
Fig. 2 einen Schnitt durch ein Airbagmodul mit angebautem Gasgenerator.

Die Gassackhalterung 1 weist ein Halteblech 2 für die Befestigung eines Gassacks 3 und einen domartig gewölbten Abschnitt als Gasleiteinrichtung 4 auf. Diese weist zwei Öffnungen 5, 6 für die Befestigung eines Rohrgasgenerators 7 auf. Am Halteblech 2 sind Bolzen 8 für die Befestigung der Gassackhalterung 1 an einem Airbaggehäuse 9 vorgesehen.

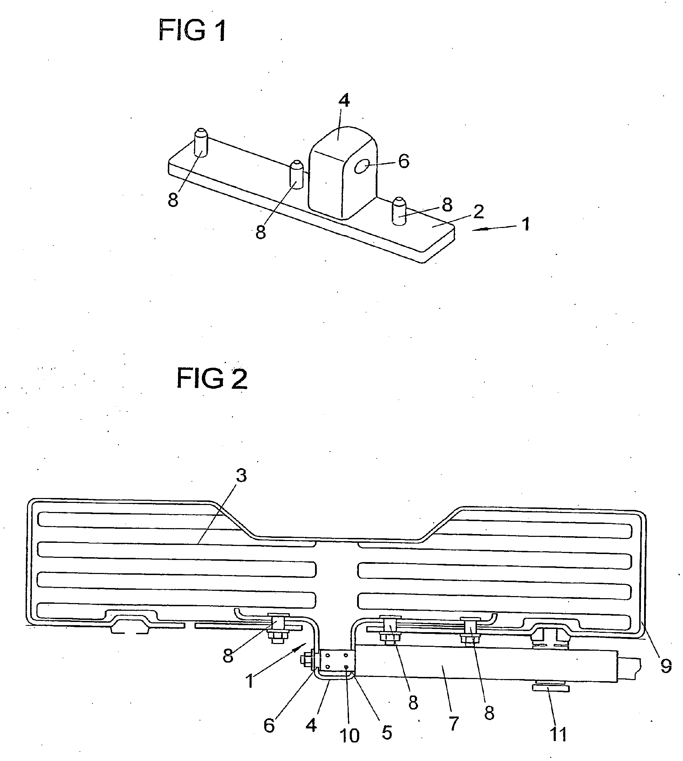

Aus der Fig. 2 ist die Gassackhalterung 1 in eingebauter Lage dargestellt. Die Gassackhalterung 1 wird bereits bei der Herstellung des Gassacks 3 in diesen eingenäht, wobei die Gasleiteinrichtung 4 aus dem Gassack 3 ragt. Bei der Montage des Gassacks werden die Gasleiteinrichtung 4 und die Bolzen 8 durch entsprechende Öffnungen im Airbaggehäuse 9 gesteckt. Nach der Befestigung des Halteblechs 2 mittels der Bolzen 8 am Airbaggehäuse 9 wird der Rohrgasgenerator 7 montiert. Dabei wird er mit seinem Ende, an dem sich Gasaustrittsöffnungen, 10 befinden, durch die Öffnungen 5, 6 in die Gasleiteinrichtung 4 eingeschoben und dort verschraubt. Dabei liegt der Rohrgasgenerator 7, gegebenenfalls unter Zwischenlage von Ringdichtungen, im Bereich der Öffnungen 5, 6 gasdicht an der Gasleiteinrichtung 4 an. Das andere Ende des Rohrgasgenerators wird mittels einer Schelle 11 am Airbaggehäuse 9 befestigt.

Es ist ersichtlich, dass die erfindungsgemäße Gassackhalterung mit Gasleiteinrichtung wegen der Herstellung in einem Stück einfach herzustellen und zu montieren ist.

## Patentansprüche

1. Airbagmodul insbesondere für einen Knieairbag mit einem Airbaggehäuse, mit einem Gassack, mit einem Rohrgasgenerator, mit einer Gassackhalterung und mit einer Gasleiteinrichtung, an der der Rohrgasgenerator befestigt ist, wobei die Gassackhalterung (1) ein Halteblech (2) für die Befestigung des Gassacks (3) aufweist, dass das Halteblech einen domartig gewölbten Abschnitt als Gasleiteinrichtung (4) aufweist, **dadurch gekennzeichnet, dass** die Gassackhalterung (1) einstückig die Gasleiteinrichtung (4) aufweist und dass die Gasleiteinrichtung (4) aus dem Gassack (3) herausragt.

2. Airbagmodul nach Anspruch 1, **dadurch gekennzeichnet, dass** das Halteblech (2) zumindest annähernd rechteckförmig ist und dass die Gasleiteinrichtung (4) zumindest annähernd einen quadratischen Querschnitt aufweist.

3. Airbagmodul nach mindestens einem der vorhergehenden Ansprüche, **dadurch gekennzeichnet, dass** die Gassackhalterung (1) als Tiefziehteil ausgebildet ist.

4. Airbagmodul nach mindestens einem der vorhergehenden Ansprüche, **dadurch gekennzeichnet, dass** der Rohrgasgenerator (7) die Gasaustrittsöffnungen (10) an einem Ende aufweist, dass der Rohrgasgenerator (7) mit diesem Ende an der Gasleiteinrichtung (4) befestigt ist und dass das andere Ende des Rohrgasgenerators (7) in einer am Airbaggehäuse befestigten Schelle (11) gelagert ist.

## Claims

1. An air bag module, in particular for a knee air bag, having an air bag housing, having an air bag, having a tubular gas generator, having an air bag holding device and having a gas guiding device, to which the tubular gas generator is fastened, wherein the air bag holding device (1) has a holding plate (2) for fastening the air bag (3), wherein the holding plate has a section which is arched in a dome-like manner as gas guiding device (4),
**characterized in that**
the air bag holding device (1) comprises the gas guiding device (4) in one piece and **in that** the gas guiding device (4) protudes out of the air bag (3).

2. The air bag module as claimed in claim 1, **characterized in that** the holding plate (2) is at least approximately rectangular, and **in that** the gas guiding device (4) has at least approximately a square cross section.

3. The air bag module as claimed in at least one of the preceding claims, **characterized in that** the air bag holding device (1) is configured as a deep drawn part.

4. The air bag module as claimed in at least one of the preceding claims, **characterized in that** the tubular gas generator (7) has the gas discharge openings (10) at one end, **in that** the tubular gas generator (7) is fastened by way of this end to the gas guiding device (4), and **in that** the other end of the tubular gas generator (7) is mounted in a clip (11) which is fastened to the air bag housing.

## Revendications

1. Module d'airbag, en particulier pour un airbag de genou, comprenant un boîtier, un coussin gonflable, un générateur de gaz tubulaire, une monture de coussin gonflable et un système de guidage de gaz, sur lequel est fixé le générateur de gaz tubulaire, dans lequel la monture de coussin gonflable (1) comprend une tôle de maintien (2) pour la fixation du coussin gonflable (3), la tôle de maintien comprend un tronçon bombé à la manière d'une coupole à titre de système de guidage de gaz (4),
**caractérisé en ce que** la monture de coussin gonflable (1) comprend le système de guidage de gaz (4) d'un seul tenant, et **en ce que** le système de guidage de gaz (4) dépasse hors du coussin gonflable (3).

2. Module d'airbag selon la revendication 1, **caractérisé en ce que** la tôle de maintien (2) est au moins approximativement de forme rectangulaire, et **en ce que** le système de guidage de gaz (4) présente au moins approximativement une section carrée.

3. Module d'airbag selon l'une au moins des revendications précédentes, **caractérisé en ce que** la monture de coussin gonflable (1) est réalisée sous forme de pièce emboutie.

4. Module d'airbag selon l'une au moins des revendications précédentes, **caractérisé en ce que** le générateur de gaz tubulaire (7) comporte des ouvertures de sortie de gaz (10) à une extrémité, **en ce que** le générateur de gaz tubulaire (7) est fixé par cette extrémité au système de guidage de gaz (4), et **en ce que** l'autre extrémité du générateur de gaz tubulaire (7) est montée dans un collier (11) fixé sur le boîtier d'airbag.
